# EUROPÄISCHE PATENTSCHRIFT

(11) **EP 4 345 034 B1**
(45) Veröffentlichungstag und Bekanntmachung des Hinweises auf die Patenterteilung: **07.05.2025**
(21) Anmeldenummer: 23196327.3
(22) Anmeldetag: 08.09.2023
(51) Int. Cl.: B65G 47/12, B65G 47/24, B65G 54/02, B65B 19/34, B65B 35/06, B65B 35/50, B65B 35/56

(54) **VERFAHREN ZUM AUSRICHTEN VON HOLZSCHRAUBEN SOWIE RICHTGERÄT DAFÜR**
METHOD OF ALIGNING WOOD SCREWS AND ALIGNING APPARATUS THEREFOR
PROCÉDÉ D'ALIGNEMENT DE VIS À BOIS ET APPAREIL D'ALIGNEMENT À CET EFFET

(30) Priorität: 30.09.2022 CH 11462022
(43) Veröffentlichungstag der Anmeldung: 03.04.2024
(73) Patentinhaber: Maurer Magnetic AG, 8627 Grüningen (CH)
(72) Erfinder: Maurer, Albert, 8624 Grüt (CH)
(74) Vertreter: Zwick, Evelyn

(56) Entgegenhaltungen:
- JP-A- H0 867 329
- SU-A1- 493 407
- US-A- 2 602 942
- US-A- 3 118 564
- US-A- 3 570 210
- US-A- 4 480 739

## Beschreibung

### Beschreibung

Die Erfindung betrifft ein Verfahren zum parallelen Ausrichten von stark verhakenden Schrauben aus ferromagnetischem Metall, geeignet für Holz, Spanplatten oder Dübel, in der Folge Holzschrauben genannt, zum späteren oder gleichzeitigen ausgerichteten Verpacken in vorgesehene Verpackungsbehälter, unter Verwendung eines Richtgerätes, sowie ein Richtgerät für diesen Zweck.

### Stand der Technik

Schrauben, Nägel, Nieten und andere Metallstäbe für ähnliche Zwecke werden industriell in grossen Stückzahlen hergestellt und anschliessend in geeignete Behälter verpackt, in denen sie schliesslich verkauft werden. Solche Anlagen sind bekannt und haben sich in der Regel bewährt. Die Verpackungen erfordern je nach Länge und Stückzahl der Metallstäbe andere Vorgaben.

Bei grossen Stückzahlen und kurzen Metallstäben werden diese als Schüttgut in die vorgesehene Verpackung geschüttet, welche anschliessend geschlossen wird. Bei langen Metallstäben, beispielsweise bei 100 mm langen Nägeln, wäre der Platzbedarf allerdings zu gross. Solche und längere Metallstäbe werden daher in der Regel ausgerichtet in die vorgesehene Verpackung gebracht. Dadurch kann der Platzbedarf der Verpackung um etwa 30% reduziert werden. Dazu ist es allerdings nicht erforderlich, dass die Köpfe der Metallstäbe alle auf derselben Seite sind.

Auch hierfür sind Vorrichtungen bekannt, welche solche Metallstäbe ausgerichtet in geeignete Verpackungen bringt. Voraussetzung dafür ist allerdings, dass die Metallstäbe gut aneinander gleiten können. Nägel erfüllen diese Voraussetzung. Auch Metallschrauben, die für eine Verbindung zu einem entsprechenden metallischen Innengewinde vorgesehen sind, lassen sich gut hantieren und dabei parallel ausrichten.

Nicht möglich ist ein automatisiertes Gleichrichten von Metallstäben aber, wenn es sich um stark verhakende Schrauben aus Metall handelt, die vorgesehen sind zum Eindrehen in Holz, Spanplatten oder dergleichen, oder in Dübel. In der Folge werden solche Schrauben Holzschrauben genannt. Da ihre Gewindegänge weiter voneinander beabstandet und zudem auskragender sind als solche von Schrauben für Metallgewinde vergleichbarer Dimensionen, verhaken sie sich leichter ineinander und lassen sich nicht zuverlässig vereinzeln, insbesondere auch wegen ihrer oft sehr rauen Wendel des Gewindes. Eine automatisierte Anlage zum vereinzelten Transport von Metallstäben bedarf bei Verwendung von Holzschrauben stets manuelles Eingreifen, weil sich immer wieder Staus durch verhakende Schrauben ergeben, die den Prozess blockieren. Beim Versuch, die Holzschrauben auseinander zu rütteln, hat es sich gezeigt, dass eine Verklemmung oft noch verstärkt wird.

Aus der US2602942 ist eine Vorrichtung bekannt, bei der Nägel auf einer Rutsche in einen Kanal fallen gelassen werden, bei dem seitlich zwei Magnetpole angeordnet sind, deren Wirkung im unteren Bereich graduell ansteigt. Am unteren Ende des Kanals steht ein austauschbarer Container, der die Nägel auffängt. Das Dokument offenbart auch ein Verfahren zum parallelen Ausrichten von stark verhakenden Schrauben aus ferromagnetischem Metall, in der Folge Holzschrauben genannt, zum späteren oder gleichzeitigen ausgerichteten Verpacken in vorgesehene Verpackungsbehälter, unter Verwendung eines Richtgerätes, das auf gewünschte Weise bereitgestellt ist, umfassend eine mit elektrischem Wechsel- oder Gleichstrom betreibbare Spule mit einer Achse, wobei sich beim Beaufschlagen der Spule mit Strom geschlossene Magnetfeldlinien ausbilden, umfassend die folgenden Schritte:
a) Positionierung einer Bearbeitungsmenge von Holzschrauben an eine Stelle im Wirkungsbereich der ausbildbaren Magnetfeldlinien;
b) Anlegen eines vordefinierten Stromprofils an die Spule zur Bildung von Magnetfeldlinien, sodass die Holzschrauben durch die Magnetwirkung wirbeln, sich dabei entlang der Magnetfeldlinien in ihrer Länge parallel zueinander ausrichten und schliesslich an der Konturwand parallel zueinander ausgerichtet anhaften;
c) Absenkung des Stromprofils an der Spule, wobei sich die Holzschrauben unter Beibehalt ihrer Ausrichtung entlang der Konturwand durch ihr Eigengewicht nach unten absenken;
d) Abführen der ausgerichteten Holzschrauben, wobei die Schritte a) bis d) bis zu einem Unterbruch des Verfahrens wiederholt werden und der nächste Schritt a) zeitgleich mit dem letzten Schritt d) durchgeführt werden kann.

Die Schrift US3570210 bezieht sich allgemein auf lang ausgestaltete, magnetische Materialien, insbesondere Widerstände. Diese werden in eine Trommel gegeben, umgeben von einer Spule, die ein Magnetfeld erzeugt. Dadurch fliegen die Metallstäbe geordnet und ausgerichtet allseitig an die Trommelwand, wodurch mittig Platz gelassen wird für nachfolgende Stäbe, bis die Trommel schliesslich voll ist. Das Dokument offenbart auch ein Richtgerät nach dem Oberbegriff des Anspruchs 11.

Eine weitere Erfindung ist in der JP H08 67329 beschrieben. Dort wird vorgeschlagen, eine Gruppe von nahe aneinander liegenden, elektronischen Komponenten auszurichten, indem sie elektrisch geladen und dadurch vereinzelt werden. Dafür durchläuft diese Gruppe auf einem Transportband eine Magnetspule.

Alle diese Anordnungen eignen sich nicht für das Ausrichten von langen Holzschrauben.

### Darstellung der Erfindung

Es ist die Aufgabe der vorliegenden Erfindung, ein eingangs beschriebenes Verfahren für eine automatisierte Anlage zu beschreiben, welches ohne manuelles Eingreifen zuverlässig verwendet werden kann. Zudem soll ein Richtgerät beschrieben werden, mit welchen das beschriebene Verfahren anwendbar ist. Insbesondere sollen auch lange Holzschrauben zuverlässig ausgerichtet werden können, auch solche zwischen 80 und 200 mm, und längere.

Die Erfindung wird gelöst durch ein Verfahren gemäss den Merkmalen des ersten Patentanspruchs und durch ein Richtgerät gemäss den Merkmalen des entsprechenden unabhängigen Vorrichtungsanspruchs.

Erfindungsgemäss verwendet das eingangs beschriebene Verfahren ein ebenso erfindungsgemässes Richtgerät, das in ausgewählter Weise bereitgestellt wird. Dieses umfasst eine mit elektrischem Wechsel- oder Gleichstrom betreibbare Spule mit einer Achse und einem Spulenmittelpunkt. Die Achse führt durch einen Hohlraum der Spule, der mit einer Konturwand zur Spule hin abgegrenzt ist. Beim Beaufschlagen der Spule mit Strom bilden sich geschlossene Magnetfeldlinien, die den Innenraum parallel zur Achse durchlaufen. Das Verfahren umfasst die folgenden Schritte:
a) Positionierung einer Bearbeitungsmenge von Holzschrauben an eine Stelle im Wirkungsbereich der ausbildbaren Magnetfeldlinien nahe der Ache der Spule, vorzugsweise höher gelegen als der Spulenmittelpunkt;
b) Anlegen eines vordefinierten Stromprofils an die Spule zur Bildung von Magnetfeldlinien, sodass die Holzschrauben durch die Magnetwirkung in den Hohlraum wirbeln, sich dabei entlang der Magnetfeldlinien in ihrer Länge parallel zueinander ausrichten und schliesslich an der Konturwand parallel zueinander ausgerichtet anhaften;
c) Kontinuierliche Absenkung des Stromprofils an der Spule, wobei sich die Holzschrauben unter Beibehalt ihrer Ausrichtung entlang der Konturwand durch ihr Eigengewicht nach unten absenken und sich dort vorzugsweise sammeln;
d) Abführen der ausgerichteten Holzschrauben, vorzugsweise zu einer Verpackungsstation;
wobei die Schritte a) bis d) bis zu einem Unterbruch des Verfahrens wiederholt werden. Der nächste Schritt a) kann jeweils zeitgleich mit dem letzten Schritt d) durchgeführt werden, um die Prozesszeit möglichst kurz zu halten.

Die Konturwand ist im Wesentlichen ein allgemeiner Zylinder, dessen Seitenwände parallel zur Achse verlaufen. Der Querschnitt des Zylinders kann mit Mulden versehen sein. Die Holzschrauben liegen im Schritt c) mit ihrer Länge parallel zur Achse an der Konturwand an.

Die zuverlässige Vereinzelung kann dadurch erreicht werden, dass die Holzschrauben durch die Magnetwirkung durch die Luft «wirbeln» und dabei gleichzeitig ausgerichtet werden. Es ist demnach vorteilhaft, wenn sie eine gewisse Strecke in der Luft zurücklegen, da ihnen so mehr Zeit und Platz zur Vereinzelung bleibt. Dies kann erreicht werden, indem die Holzschrauben im Schritt a) nicht in den Hohlraum gebracht werden, sondern an eine Stelle davor, stets noch im Wirkungsbereich der Magnetfeldlinien.

Das beschriebene Verfahren kann mit Wechselstrom erreicht werden, das dem Profil einer abfallenden Amplitude unterliegt. Dadurch werden die Holzschrauben gleichzeitig entmagnetisiert. Andernfalls kann Gleichstrom verwendet werden, wobei eine Entmagnetisierung anschliessend folgen kann.

Insbesondere kann die Achse der Spule im Gebrauch horizontal oder vertikal ausgerichtet sein, das Richtgerät wird dafür vor dem Schritt a) wunschgemäss platziert. Bei horizontaler Ausrichtung können die parallel ausgerichteten Holzschrauben in Schritt d) aus einem oder mehreren unten in der Konturwand angeordneten Auffangvorrichtungen abtransportiert werden, vorzugsweise mit einer Förderanlage und/oder in Sammelbehältern.

Bei vertikaler Anordnung der Achse können die Holzschrauben von unten, vorzugsweise aber von oben in den Hohlraum fallen, was die Vereinzelung erneut begünstigt. Im Schritt c) gleiten die Holzschrauben entsprechend aus der Konturwand senkrecht stehend nach unten, wo geeignete Sammelbehälter vorgesehen sind, in denen die Holzschrauben schliesslich abtransportiert werden können.

Das erfindungsgemässe Richtgerät zum parallelen Ausrichten von Holzschrauben umfasst eine Spule mit einer Achse, die durch einen Hohlraum der Spule führt. Dieser Hohlraum ist mit einer Konturwand zur Spule hin abgegrenzt und weist einen kleinsten Durchmesser D auf. Der kleinste Durchmesser D ist definiert als der kleinste Durchmesser im Hohlraum, der senkrecht durch die Achse der Spule führt. Die Achse wiederum verläuft durch den Schwerpunkt der Spule, auch Spulenmittelpunkt genannt. Die Spule kann nach der Konturwand des Holraumes angepasst geformt werden und lokal entsprechende Abstände aufweisen.

Das Richtgerät umfasst zudem eine an der Spule elektrisch verbundene Speisung und eine Steuerung zum Beaufschlagen der Spule mit Wechselstrom und/oder Gleichstrom, sodass sich im Betrieb geschlossene Magnetfeldlinien ausbilden können, die den Innenraum parallel zur Achse durchlaufen.

Die Konturwand weist eine oder mehrere bevorzugte Haftstellen auf, welche näher an der Spule sind als benachbarte Gebiete in der Kontur. Unterhalb dieser bevorzugten Haftstellen sind ein oder mehrere Sammelkanäle oder Sammelbehälter angeordnet, welche in jeder horizontalen Ausdehnung quer zur Achse schmäler als ein Drittel, vorzugsweise schmäler als ein Viertel des Durchmessers D sind. Sobald die magnetische Anziehungskraft nachlässt, gleiten die Holzschrauben entlang der Konturwand durch ihr Eigengewicht nach unten und sammeln sich schliesslich in den Sammelkanälen oder Sammelbehältern, deren Breite beschränkt ist. Diese Beschränkung soll verhindern, dass sich die Holzschrauben wieder querstellen können. Idealerweise sollten sie schmäler sein als die Hälfte der Länge der Holzschrauben, mindestens im untersten Bereich.

In einer Variante kann im Hohlraum eine Trennwand angeordnet sein zur Teilung des Hohlraums in zwei getrennte Teilräume. Dadurch können im Schritt a) zwei Bearbeitungsmengen von gleich- oder verschiedenartigen Holzschrauben an zwei Stellen positioniert werden. Jede der Stellen ist einem der Teilräume zugeordnet, indem sie diesem näher ist als jedem anderen Teilraum. Dadurch ergeben sich in einem Hohlraum zwei gleichzeitig wirkende Teilräume, was zur erhöhten Kapazität führen kann.

In einer zweiten Variante, die mit der ersten vereinbar ist, sind im Hohlraum eine oder mehrere vorzugsweise verschiebbare Begrenzungswände angeordnet, die mindestens im Bereich der Konturwand quer zur Achse verlaufen. Zu Beginn des Verfahrens werden die Positionen dieser Begrenzungswände entsprechend der Länge der Holzschrauben positioniert. Die Begrenzungswände sind einzeln verschiebbar, um die Holzschrauben auf eine gewünschte Längenbegrenzung zu bringen, die beispielsweise einer Verpackungsabmessung entspricht. Bei Verwendung solcher Begrenzungswände werden die Holzschrauben im Schritt a) vorzugsweise im Hohlraum positioniert.

In einem bevorzugten Verfahren kann eine Förderanlage die parallel ausgerichteten Holzschrauben in den Sammelkanälen oder Sammelbehältern abführen. Dazu kann beispielsweise ein Förderband durch den Hohlraum führen, welches dort entweder Sammelbehälter abtransportiert oder direkt als Sammelkanal ausgestaltet ist. Alternativ können Sammelbehälter auch gestossen oder auf Rollen weitertransportiert werden. Sie können, mindestens innerhalb der Konturwand, im Profil V- oder U-förmig ausgestaltet sein. So wird gewährleistet, dass die Ausrichtung der Holzschrauben beigehalten wird.

Eine Zubringervorrichtung kann zudem vorgesehen sein zum Zuführen einer Bearbeitungsmenge von Holzschrauben an eine Stelle im Wirkungsbereich der ausbildbaren Magnetfeldlinien nahe der Ache der Spule. Diese Zubringervorrichtung kann einen Rütteltisch, einen mechanischen Greifer oder einen mit einem Magneten betreibbaren Heber umfassen, zum Abtrennen einer Bearbeitungsmenge von Holzschrauben aus einer Grossmenge davon. Der Magnet kann ein Elektromagnet oder ein Permanentmagnet sein. Bei einem Permanentmagneten wird die Kraft zu den Holzschrauben durch Schaffung eines Abstandes dazu aufgehoben.

Je nachdem, ob die Achse des Richtgerätes horizontal oder vertikal ausgerichtet ist, sind eine Förderanlage zum Abführen der Holzschrauben und eine Zubringervorrichtung anders ausgestaltet.

Bei vertikaler Ausrichtung ist die Achse in Fallrichtung der Holzschrauben, sodass sie in den Hohlraum hineinfallen können und anschliessend ausgerichtet in Sammelbehältern aufgefangen werden, wenn sie aus dem Hohlraum hinausfallen. Die Holzschrauben können alternativ aber auch von unten entlang der Magnetlinien in den Hohlraum hinaufgebracht werden, sodass die Zufuhr auf einem Förderband erfolgen kann. Abgeführt werden können sie in Sammelbehältern, die beidseits neben diesem Förderband angeordnet sind.

Bei horizontaler Anordnung der Achse kann die Zufuhr vor oder durch den Hohlraum erfolgen.

Bei Verwendung von Wechselstrom sind die Holzschrauben nach dem Prozessdurchlauf bereits entmagnetisiert. Bei Verwendung von Gleichstrom müssen sie anschliessend noch einen Entmagnetisier-Prozess durchlaufen, was in wenigen Sekunden erreicht werden kann.

### Kurze Beschreibung der Zeichnungen

Im Folgenden wird die Erfindung in verschiedenen Zeichnungen dargestellt und mit Hilfe der später erläuterten Bezugszeichen näher erklärt. Es zeigen:
- Fig. 1: eine schematische Anordnung der Eingliederung des erfindungsgemässen Richtgerätes in einem Herstellprozess von Holzschrauben;
- Fig. 2a: eine schematische Ansicht auf eine mögliche Ausführung eines Richtgerätes;
- Fig. 2b: eine Darstellung gemäss Fig. 2a mit zwei Teilräumen;
- Fig. 2c: eine Darstellung gemäss Fig. 2a, aber im Längsschnitt mit verschiebbaren Begrenzungswänden;
- Fig. 2d: eine Darstellung gemäss Fig. 2c, aber von oben betrachtet und mit anderen Begrenzungswänden;
- Fig. 3: eine schematische Darstellung eines Richtgerätes der Fig. 2 im Längsschnitt mit dargestellten Magnetfeldlinien;
- Fig. 4: die einzelnen Prozessschritte a) bis d) beim Gebrauch des Richtgerätes;
- Fig. 5: eine mögliche Ausführung eines Richtgerätes in vertikaler Anordnung.

### Wege zur Ausführung der Erfindung

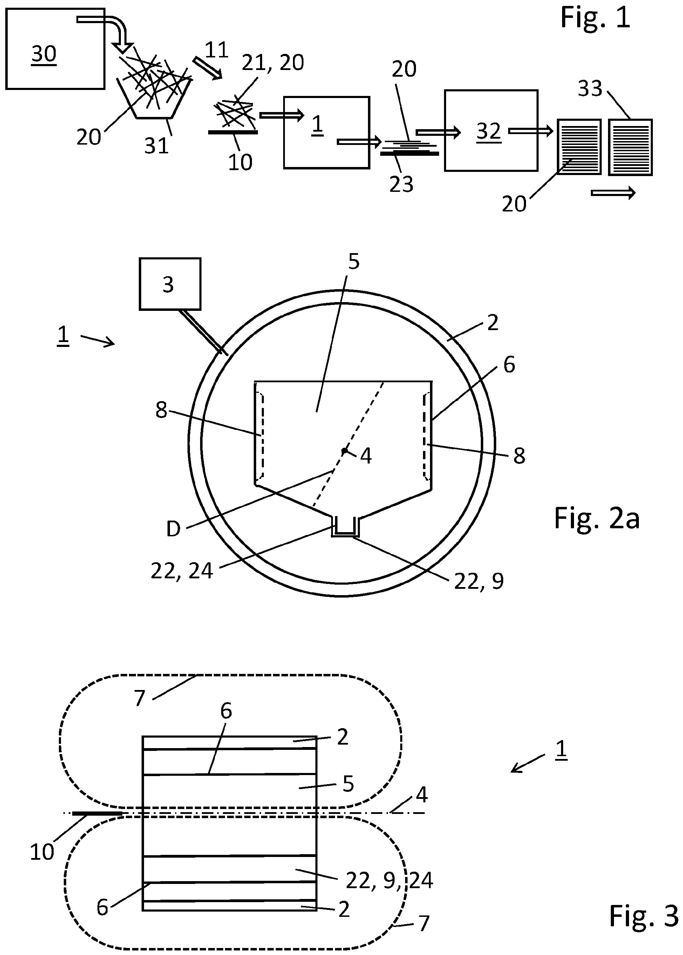

In Fig. 1 ist schematisch ein Produktionsprozess von ferromagnetischen Holzschrauben 20 oder anderen ferromagnetischen Metallstäben wie allgemeine Schrauben, Nägel, Nieten oder dergleichen dargestellt, der ein erfindungsgemässes Richtgerät 1 umfasst. Nach deren Produktion in einer Produktionsanlage 30 werden die Metallstäbe, insbesondere die Holzschrauben 20, in einer Grossmenge 31 gesammelt, wovon eine Portion als Bearbeitungsmenge 21 an einer Stelle 10 für das Ausrichten bereitgestellt wird. Diese Bearbeitungsmenge 21 von Holzschrauben 20 wird schliesslich im Richtgerät 1 ausgerichtet und mit einer Förderanlage 23 zu einer Verpackungsstation 32 gebracht, in welcher die ausgerichteten Holzschrauben 20 in Verpackungsbehältern 33 verpackt werden.

Solange die Metallstäbe gute Gleiteigenschaften haben, kann eine parallele Gleichrichtung auf einfache Art geschehen, zum Beispiel durch Rütteln in einem schmalen Kanal. Mit Holzschrauben 20 ist dies in der Regel nicht möglich und wird schwieriger, je länger diese sind. Sie verhaken mit ihren Gewinden aneinander zu Klumpen und lassen sich nur schwer vereinzeln. Dies führt dazu, dass Produktionsstrassen zwischen der Produktionsanlage 30 und der Verpackungsstation 32 blockiert werden und nur nach manuellem Eingreifen wieder mit der Arbeit fortführen können. Daher wird erfindungsgemässes dazwischen ein Richtgerät 1 vorgesehen, wie in Fig. 1 dargestellt.

Die Ansicht in Fig. 2a zeigt eine frontale Ansicht eines erfindungsgemässen Richtgerätes 1, die Fig. 3 zeigt ein Längsschnitt davon. Das Richtgerät 1 umfasst eine mit Gleich- oder Wechselstrom betreibbare Spule 2 zur Erzeugung eines Magnetfeldes, dessen Magnetfeldlinien 7 in Fig. 3 dargestellt sind. Die Spule 2 kann dazu mit einer mit einer Speisung versehenen Steuerung 3, in Fig. 2a dargestellt, elektrisch versorgt werden. Die Spule 2 weist eine Achse 4 auf, die in Fig. 2a ins Papier läuft. In Fig. 3 ist die Achse 4 in der Papierebene dargestellt. Sie verläuft parallel zu den Magnetfeldlinien 7.

Die Spule 2 weist einen Hohlraum 5 auf, welcher sich um die Achse 4 herum erstreckt. Dieser Hohlraum 5 ist mit einer Konturwand 6 zur Spule 2 hin abgegrenzt. Beim Beaufschlagen der Spule 2 mit Strom bilden sich die geschlossenen Magnetfeldlinien 7 aus, die den Innenraum 5 durchlaufen. Aus praktischen Gründen kann die Spule 2 ganzseitig mit einem Gehäuse umgeben sein, das hier nicht dargestellt ist.

Im Weiteren wird das Richtgerät 1 im Zusammenhang mit dem damit angewandten Verfahren beschrieben.

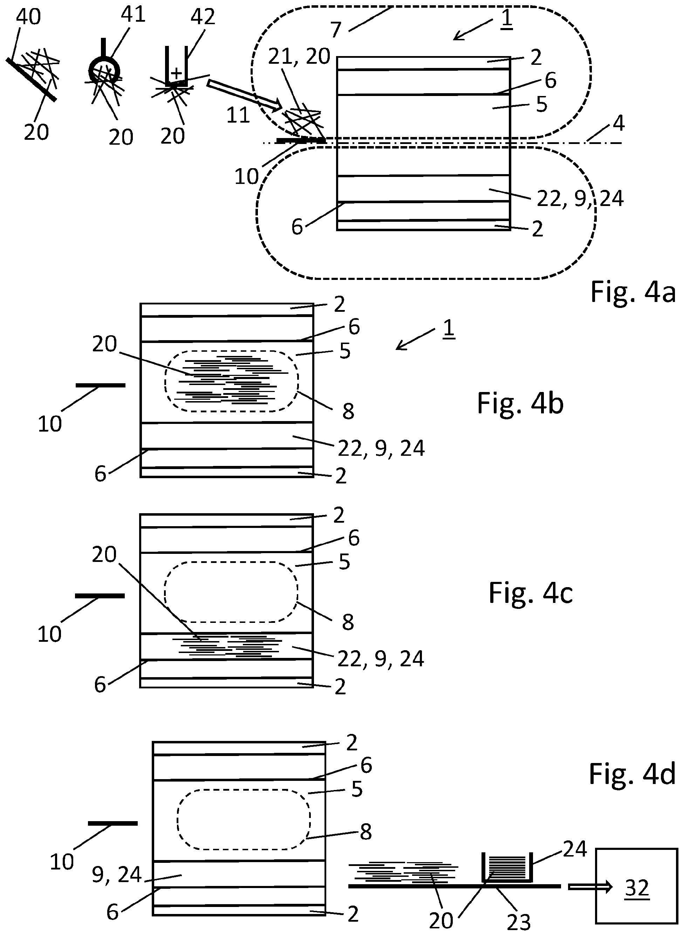

In der Fig. 4 sind die einzelnen Schritte a) bis d) des erfindungsgemässen Verfahrens dargestellt. Dieses dienst dem parallelen Ausrichten von stark verhakenden Schrauben 20 aus Metall, geeignet für Holz, Spanplatten oder Dübel, hier Holzschreiben 20 genannt, zum späteren oder gleichzeitigen ausgerichteten Verpacken in später vorgesehene Verpackungsbehälter 33. Die Verfahrensschritte sind die folgenden:
Im Schritt a), dargestellt in Fig. 4a, wird eine Portion oder Bearbeitungsmenge 21 von Holzschrauben 20 an eine Stelle 10 im Wirkungsbereich der ausbildbaren Magnetfeldlinien 7 nahe der Ache 4 der Spule 2 positioniert. Vorzugsweise ist diese Stelle 10 höher gelegen als ein Spulenmittelpunkt, der bspw. durch deren Schwerpunkt definiert ist. Diese Stelle 10 kann innerhalb des Hohlraums 5 sein oder davor, ausserhalb. Dazu kann eine Zubringervorrichtung 11 verwendet werden, die bevorzugt einen Rütteltisch 40 und/oder einen Roboterarm umfassen kann, wobei der Roboterarm eine Portion 21 aus der Grossmenge 31 mittels eines mechanischen Greifers 41 oder mittels eines mit einem Magneten versehenen Hebers 42 herausholen und an die gewünschte Stelle 10 bringen kann. Als Magnet kann ein Elektromagnet oder ein Permanentmagnet eingesetzt werden. Durch Eliminierung des Magnetismus am Heber 42 fallen sie Holzschrauben 20 schliesslich ab. Dies kann durch Abschaltung eines Elektromagneten oder durch Distanzschaffung der Holzschrauben 20 zu einem Permanentmagneten erreicht werden.

Sobald die Holzschrauben 20 an der gewünschten Stelle 10 sind, kann Schritt b) folgen, dargestellt in Fig. 4b. In diesem Schritt wird ein vordefiniertes Stromprofil an die Spule 2 zur Bildung von Magnetfeldlinien 7 angelegt, sodass die Holzschrauben 20 durch die Magnetwirkung in den Hohlraum 5 wirbeln. Dabei richten sie sich entlang der Magnetfeldlinien 7 in ihrer Länge parallel zueinander aus und haften schliesslich parallel zueinander ausgerichtet an der Konturwand 6 liegend an. Dies geschieht, weil die Holzschrauben 20 metallisch und somit ferromagnetisch sind. Bei diesem Flug durch den Hohlraum 5 und zur Konturwand 6 werden sie vereinzelt, sodass sie schliesslich parallel nebeneinander an der Konturwand 6 anliegen. Je länger die Flugstrecke ist, desto mehr Zeit bleibt für die Vereinzelung. Zudem ist die magnetische Kraft zur Ausrichtung stärker, je längere die Holzschrauben 20 sind. Für Holzschrauben 20 mit einer Länge ab etwa 6 oder 8 cm, vorzugsweise ab 10 cm, überwindet die magnetische Kraft der Spule 2 deren Reibungskräfte untereinander, wenn sie mit etwa 130 A betrieben wird. Zu kurze Holzschrauben werden nicht vollständig vereinzelt und ausgerichtet. Dies führt dazu, dass Teile der Bearbeitungsmenge 21 gesamthaft und nicht ausgerichtet in den Innenraum 5 und an die Konturwand 6 gebracht werden. Entscheidend ist auch das Verhältnis von der Länge zum Durchmesser der Holzschrauben 20. Je grösser dieses Verhältnis, umso besser werden die Holzschrauben 20 vereinzelt. In den Versuchen wurde ein Hohlraum 5 mit einer mittleren Breite, Länge und Höhe von je etwa 40 bis 50 cm verwendet.

Die Holzschrauben 20 legen sich jeweils an bevorzugten Haftstellen 8 an der Konturwand 6 an. Diese bevorzugten Haftstellen 8 sind näher an der Spule 2 als benachbarte Stellen. Entsprechend kann die Konturwand 6 derart geformt sein, dass sie unterschiedliche Abstände zur Spule 2 aufweist, um die Holzschrauben im Schritt b) gezielt an bevorzugten Haftstellen 8 zu sammeln, die näher an der Spule 2 sind als benachbarte Stellen. Unerwünscht sind Haftstellen 8 insbesondere an einer oberen Stelle der Konturwand 6. In der Fig. 2a sind diese bevorzugten Haftstellen 8 insbesondere an beiden Seiten der Konturwand 6 dargestellt sowie unten. Alternativ kann auch die Spule 2 derart geformt werden, dass überall die gewünschten Abstände zur Konturwand 5 erreicht werden.

Im Schritt c), dargestellt in Fig. 4c, wird, im Fall von Wechselstrom, die Amplitude des Stromprofils an der Spule 8 kontinuierlich abgesenkt. Im Fall von Gleichstrom wird entsprechend die Stromstärke kontinuierlich gesenkt. Dabei senken sich die Holzschrauben 20 unter Beibehalt ihrer Ausrichtung entlang der Konturwand 6 durch ihr Gewicht nach unten ab und können sich dort sammeln. Alternativ können sie auch direkt nach dem Absenken auf einer Förderanlage 23, beispielsweise auf einem Laufband, aufgenommen und, wie später im Schritt d) beschrieben, abtransportiert werden, vorzugsweise auf einem magnetischen Laufband.

Falls als Stromprofil im Schritt b) ein Gleichstromprofil angelegt wird, welches im Schritt c) langsam abklingt, oder falls noch ein Restmagnetismus der Holzschrauben 20 festgestellt wird, können die Holzschrauben 20 anschliessend einem in der Amplitude abklingenden Magnetwechselfeld ausgesetzt werden, zum Entmagnetisieren der Holzschrauben 20.

Vorzugsweise kann zum Sammeln der Holzschrauben 20 im Schritt c) eine Auffangvorrichtung 22 angeordnet sein. Diese kann zu einem oder mehreren Sammelkanälen 9 ausgestaltet sein, die ein Teil der Konturwand 6 sein können. Ein solcher Sammelkanal 9 ist in Fig. 2a dargestellt. Als Auffangvorrichtung 22 können alternativ oder zusätzlich auch ein oder mehrere Sammelbehälter 24 vorgesehen sein. Solche könnten beispielsweise in einem Sammelkanal 9 angeordnet sein, wie in Fig. 2a dargestellt. Die Sammelkanäle 9 und/oder die Sammelbehälter 24 sind in jeder horizontalen Ausdehnung quer zur Achse 4 schmäler als ein Drittel, vorzugsweise schmäler als ein Viertel des Durchmessers D. Dadurch wird gewährleistet, dass die Holzschrauben 20 ihre parallele Ausrichtung wahren. Vorzugsweise sollten sie schmäler sein als die Hälfte der Länge der Holzschrauben 20.

Nach dem Schritt c) sind alle Holzschrauben 20 ausgerichtet und in den jeweils vorhandenen Auffangvorrichtungen 22 gesammelt.

Im Schritt d) werden, wie in Fig. 4d dargestellt, die ausgerichteten Holzschrauben 20 abgeführt, vorzugsweise zu einer Verpackungsstation 32. Dazu kann eine Förderanlage 23 verwendet werden, welche die Holzschrauben 20 entweder direkt oder in Sammelbehältern 24 transportiert.

Die Schritte a) bis d) können so lange wiederholt werden, bis das Verfahren unterbrochen wird. Der nächste Schritt a) kann zeitgleich mit dem vorherigen Schritt d) durchgeführt werden, um Prozesszeit zu sparen.

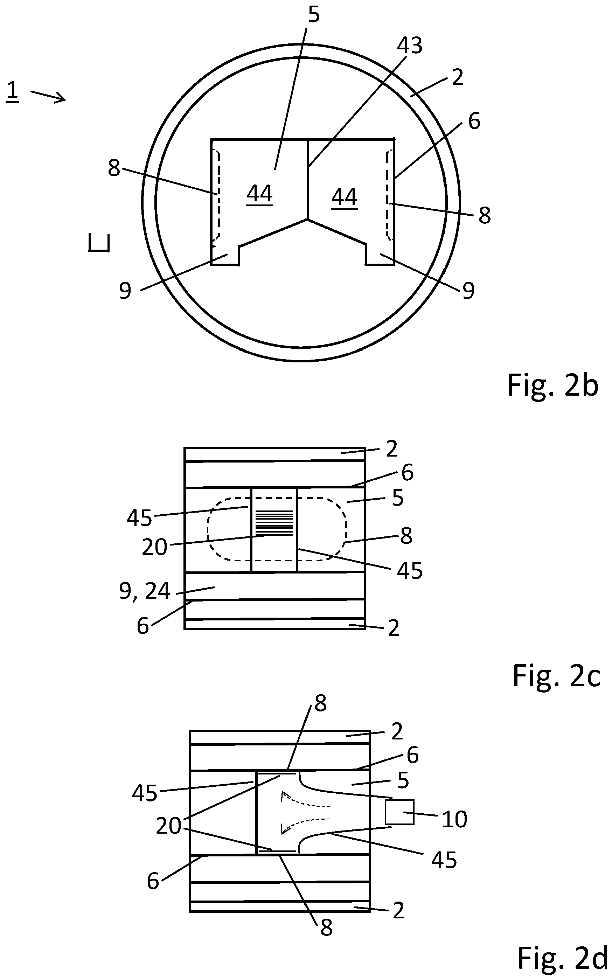

Die Spulenachse 4 kann insbesondere horizontal oder vertikal verlaufen, wie in den Figuren 2a, b und 4 dargestellt. Bei horizontaler Ausrichtung ist die Bearbeitungsmenge 21 im Schritt a) vorzugsweise an eine Stelle 10 ausserhalb des Hohlraums 5 zu bringen. Dadurch wird der Weg verlängert, welcher die Holzschrauben 20 bis zur Konturwand 6 zurücklegen, was die Vereinzelung begünstigt. Zudem ist es einfacher, die Zufuhr vollständig ausserhalb des Richtgerätes 1 anordnen zu können. In diesem Fall sind vorzugsweise ein oder mehrere Sammelkanäle 9 zum Auffangen der sich im Schritt c) abgesenkten, ausgerichteten Holzschrauben 20 in der Konturwand 6 vorzusehen. In Fig. 3b sind zwei solche Sammelkanäle 9 dargestellt.

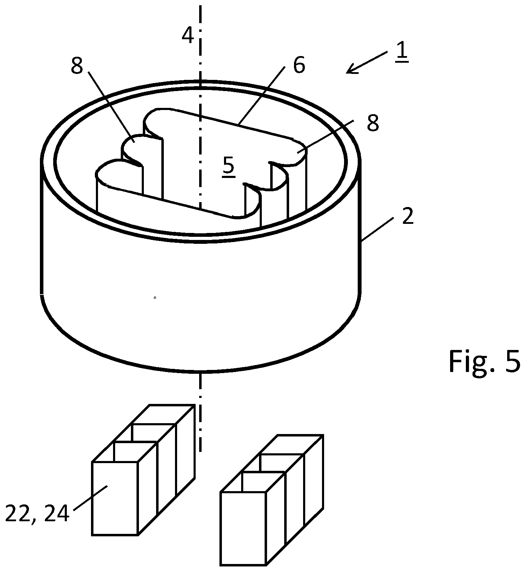

Andernfalls, wenn die Achse 4 vertikal verläuft, wie dargestellt in Fig. 5, kann die Bearbeitungsmenge 21 im Schritt a) entweder an eine Stelle unterhalb oder oberhalb der Spule 2 gebracht werden, wobei die Bearbeitungsmenge 21 im zweitgenannten Fall in den Hohlraum hineinfällt und Schritt b) dann unmittelbar folgt. Andernfalls kann die Bearbeitungsmenge 21 unterhalb des Hohlraums 5 oder darin angeordnet sein.

Bei vertikal ausgerichteten Achse 4 sind die bevorzugten Haftstellen 8 vorzugsweise als Sammelmulden 8 in der Konturwand 6 ausgestaltet. Entsprechend sollte sich dann unter jeder Sammelmulde 8 ein Sammelbehälter 24 befinden, in dem die Holzschrauben 20 (nicht dargestellt) im Schritt c) stehend aufgefangen werden können.

Alternativ kann die Förderanlage 23 zum Abführen der ausgerichteten Holzschrauben 22 zu einem magnetischen Laufband ausgestaltet sein (nicht dargestellt), welches unterhalb des Richtgerätes 1 nahe an dessen Konturwand 6 verläuft und die sich stetig absenkenden Holzschrauben 22 erst an ihrem unteren Ende und schliesslich in ihrer gesamten Länge haftend aufnimmt. Die Förderanlage 23 kann eine Neigung aufweisen, um die Aufnahme zu erleichtern. Zusätzlich oder alternativ kann eine Rampe angeordnet sein, welche das Gleiten zwischen der Konturwand 8 und der Förderanlage 23 unter Beibehaltung der Ausrichtung sicherstellt (nicht dargestellt).

In den Figuren 2b und 2c sind zwei mögliche Erweiterungen zum Richtgerät 1 dargestellt. In einer ersten Variante gemäss Fig. 2b kann im Hohlraum 5 eine Trennwand 43 angeordnet sein zur Teilung des Hohlraums 5 in zwei getrennte Teilräume 44. Dadurch können im Schritt a) zwei Bearbeitungsmengen 21 von gleich- oder verschiedenartigen Holzschrauben 20 an zwei Stellen 10 positioniert werden. Jede der Stellen 10 ist einem der Teilräume 44 zugeordnet, indem sie diesem näher ist als jedem anderen Teilraum 44. Dadurch ergeben sich in einem Hohlraum 5 zwei gleichzeitig wirkende Teilräume 44, in denen beispielsweise verschiedene Holzschrauben 20 gleichzeitig ausgerichtet werden können. Somit können die Kapazität und die Flexibilität erhöht werden.

In einer zweiten Variante, dargestellt in Fig. 2c und 2d, sind im Hohlraum 5 zusätzlich zu einer Trennwand 43 oder alternativ dazu eine oder mehrere vorzugsweise verschiebbare Begrenzungswände 45 angeordnet, die mindestens im Bereich der Konturwand 6 quer zur Achse 4 verlaufen. Zu Beginn des Verfahrens werden die Positionen dieser Begrenzungswände 45 entsprechend der Länge der Holzschrauben 20 beabstandet voneinander positioniert. Die Begrenzungswände 45 sind einzeln verschiebbar. Ihr Abstand zueinander kann beispielsweise einer Verpackungsabmessung der Holzschrauben 20 entsprechen. Die Begrenzungswände 45 müssen nicht durchgehend sein. Allerdings kann eine hintere Begrenzungswand 45 durchaus durchgehend sein, damit die Holzschrauben 20 nicht durch diese hindurchtreten. Wie in Fig. 2d dargestellt kann sich eine vordere Begrenzungswand 45, die zwischen der Stelle 10 für die Bearbeitungsmenge 21 und der hinteren Begrenzungswand 45 liegt, vorzugsweise trichterförmig in Richtung der Stelle 10 krümmen, um zu gewährleisten, dass alle Holzschrauben 20 nach ihrer Verwirbelung zwischen den Begrenzungswänden 45 an der Konturwand 6 haften. Alternativ kann es in diesem Fall vorteilhaft sein, die Stelle 10 für die Bearbeitungsmenge 21 im Hohlraum 5 selbst vorzusehen.

Die Verwendung solcher Begrenzungswände 45 kann die Verpackung im späteren Schritt vereinfachen.

### Bezugszeichenliste

- 1: Richtgerät
- 2: Spule
- 3: eine mit einer Speisung versehenen Steuerung
- 4: Achse der Spule, verläuft durch dessen Schwerpunkt (Spulenmittelpunkt)
- 5: Hohlraum
- 6: Konturwand
- 7: Magnetfeldlinien
- 8: bevorzugte Haftstelle, Sammelmulde
- 9: Sammelkanal
- 10: Stelle im Bereich der Ache der Spule und im Wirkungsbereich der Magnetfeldlinien
- 11: Zubringervorrichtung
- 20: Holzschrauben, ferromagnetisch
- 21: Bearbeitungsmenge, Portion
- 22: Auffangvorrichtung
- 23: Förderanlage zum Abführen von gerichteten Holzschrauben
- 24: Sammelbehälter
- 30: Produktionsanlage
- 31: Grossmenge
- 32: Verpackungsstation
- 33: Verpackungsbehälter
- 40: Rütteltisch
- 41: Greifer, mechanisch betreibbar
- 42: Heber, mit einem Elektromagneten betreibbar
- 43: Trennwand
- 44: Teilraum
- 45: Begrenzungswand, verschiebbar
- D: Kleinster Durchmesser der Konturwand, der durch sie Achse und den Spulenmittelpunkt verläuft

## Patentansprüche

1. Verfahren zum parallelen Ausrichten von stark verhakenden Schrauben aus ferromagnetischem Metall, geeignet für Holz, Spanplatten oder Dübel, in der Folge Holzschrauben (20) genannt, zum späteren oder gleichzeitigen ausgerichteten Verpacken in vorgesehene Verpackungsbehälter (33), unter Verwendung eines Richtgerätes (1), das auf gewünschte Weise bereitgestellt ist, umfassend eine mit elektrischem Wechsel- oder Gleichstrom betreibbare Spule (2) mit einer Achse (4) und einem Spulenmittelpunkt, wobei die Achse (4) durch einen Hohlraum (5) der Spule (2) führt, der mit einer Konturwand (6) zur Spule (2) hin abgegrenzt ist, wobei sich beim Beaufschlagen der Spule (2) mit Strom geschlossene Magnetfeldlinien (7) ausbilden, die den Hohlraum (5) parallel zur Achse (5) durchlaufen, umfassend die folgenden Schritte:
a) Positionierung einer Bearbeitungsmenge (21) von Holzschrauben (20) an eine Stelle (10) im Wirkungsbereich der ausbildbaren Magnetfeldlinien (7) nahe der Ache (4) der Spule (2), wobei die Stelle (10) vorzugsweise höher gelegen ist als der Spulenmittelpunkt;
b) Anlegen eines vordefinierten Stromprofils an die Spule (2) zur Bildung von Magnetfeldlinien (7), sodass die Holzschrauben (20) durch die Magnetwirkung in den Hohlraum (5) wirbeln, sich dabei entlang der Magnetfeldlinien (7) in ihrer Länge parallel zueinander ausrichten und schliesslich an der Konturwand (8) parallel zueinander ausgerichtet anhaften;
c) Kontinuierliche Absenkung des Stromprofils an der Spule (2), wobei sich die Holzschrauben (20) unter Beibehalt ihrer Ausrichtung entlang der Konturwand (6) durch ihr Eigengewicht nach unten absenken und sich dort vorzugsweise sammeln;
d) Abführen der ausgerichteten Holzschrauben (20), vorzugsweise zu einer Verpackungsstation (32);
wobei die Schritte a) bis d) bis zu einem Unterbruch des Verfahrens wiederholt werden und der nächste Schritt a) zeitgleich mit dem letzten Schritt d) durchgeführt werden kann.

2. Verfahren nach Anspruch 1, **dadurch gekennzeichnet, dass** das Stromprofil entweder im Schritt c), vorzugsweise auch in Schritt b), aus in der Amplitude abklingenden Wechselstromimpulsen besteht, oder im Schritt b) aus einem Gleichstromprofil besteht, welches im Schritt c) langsam abklingt, und die Holzschrauben zum Entmagnetisieren (20) anschliessend vorzugsweise einem in der Amplitude abklingenden Magnetwechselfeld ausgesetzt werden.

3. Verfahren nach Anspruch 1 oder 2, **dadurch gekennzeichnet, dass** die Konturwand (6) unterschiedliche Abstände zur Spule (2) aufweist, um die Holzschrauben (20) im Schritt b) gezielt an bevorzugten Haftstellen (8) zu sammeln, die näher an der Spule (2) sind als benachbarte Stellen.

4. Verfahren nach einem der vorhergehenden Ansprüche, **dadurch gekennzeichnet, dass** in Gleit- oder Fallrichtung unterhalb der bevorzugten Haftstellen (8) eine oder mehrere Auffangvorrichtungen (22) angeordnet sind, in welchen sich die Holzschrauben (20) nach dem Schritt c) sammeln, bevor sie abtransportiert werden.

5. Verfahren nach einem der vorhergehenden Ansprüche, **dadurch gekennzeichnet, dass** im Hohlraum (5) mindestens eine Trennwand (43) angeordnet ist zur Teilung des Hohlraums (5) in mindestens zwei getrennte Teilräume (44), wobei im Schritt a) mindestens zwei Bearbeitungsmengen (21) von gleichen oder anderen Holzschrauben (20) an mindestens zwei Stellen (10) positioniert werden, und wobei jedem Teilraum (44) eine andere Stelle (10) eindeutig zugeordnet ist, die dem jeweiligen Teilraum (44) am nächsten ist.

6. Verfahren nach einem der vorhergehenden Ansprüche, **dadurch gekennzeichnet, dass** im Hohlraum (5) eine oder mehrere vorzugsweise verschiebbare Begrenzungswände (45) angeordnet sind, die mindestens im Bereich der Konturwand (6) quer zur Achse (4) verlaufen, **dadurch gekennzeichnet, dass** die Positionen dieser Begrenzungswände (45) zu Beginn des Verfahrens entsprechend der Länge der Holzschrauben (20) positioniert werden.

7. Verfahren nach einem der vorhergehenden Ansprüche, **dadurch gekennzeichnet, dass** die Holzschrauben (20) in Schritt d) mit einer Förderanlage (23) und/oder in Sammelbehältern (24) abtransportiert werden.

8. Verfahren nach einem der vorhergehenden Ansprüche, **dadurch gekennzeichnet, dass** die Achse (4) horizontal ausgerichtet ist und die Bearbeitungsmenge (21) im Schritt a) vorzugsweise an eine Stelle (10) ausserhalb des Hohlraums (5) gebracht wird.

9. Verfahren nach Anspruch 8, **dadurch gekennzeichnet, dass** die Konturwand (6) für den axialen Abtransport im Schritt d) unten einen oder mehrere Sammelkanäle (9) aufweist, zum Auffangen der sich im Schritt c) abgesenkten, ausgerichteten Holzschrauben (20).

10. Verfahren nach einem der Ansprüche 1 bis 7, **dadurch gekennzeichnet, dass** die Achse (4) vertikal ausgerichtet ist und die Bearbeitungsmenge im Schritt a) entweder an eine Stelle (10) unterhalb oder oberhalb der Spule (2) gebracht wird, wobei die Bearbeitungsmenge (21) im zweitgenannten Fall in den Hohlraum (5) hineinfallen kann und Schritt b) unmittelbar folgt, wobei die Konturwand (5) vorzugsweise mehrere Sammelmulden (8) als bevorzugte Haftstellen (8) im Schritt b) aufweist, welche näher an der Spule (2) angeordnet sind als benachbarte Stellen, und sich vorzugsweise unter jeder Sammelmulde (8) ein Sammelbehälter (24) befindet, in dem die Holzschrauben (20) im Schritt c) stehend aufgefangen werden.

11. Richtgerät (1) zum parallelen Ausrichten von stark verhakenden Schrauben (20) aus Metall, geeignet für Holz, Spanplatten oder Dübel, in der Folge Holzschrauben (20) genannt, zum späteren oder gleichzeitigen ausgerichteten Verpacken in vorgesehene Verpackungsbehälter (33), umfassend eine Spule (2) mit einer Achse (2), die durch einen Hohlraum (5) der Spule (2) führt, der mit einer Konturwand (6) zur Spule (2) hin abgegrenzt ist und einen kleinsten Durchmesser D aufweist, eine an der Spule (2) elektrisch verbundene Speisung und Steuerung (3) zum Beaufschlagen der Spule (2) mit Wechselstrom und/oder Gleichstrom, sodass sich im Betrieb geschlossene Magnetfeldlinien (7) ausbilden können, die den Innenraum (5) durchlaufen, wobei die Konturwand (6) eine oder mehrere bevorzugte Haftstellen (8) aufweist, welche näher an der Spule (2) sind als benachbarte Gebiete in der Konturwand (6),
**dadurch gekennzeichnet, dass**
unterhalb dieser bevorzugten Haftstellen (8) ein oder mehrere Sammelkanäle (9) und/oder Sammelbehälter (24) angeordnet sind, welche in jeder horizontalen Ausdehnung quer zur Achse schmäler als ein Drittel, vorzugsweise schmäler als ein Viertel des Durchmessers D sind.

12. Richtgerät (1) nach Anspruch 11, **gekennzeichnet durch** eine Förderanlage (23) zum Abführen der parallel ausgerichteten Holzschrauben (20) in den Sammelkanälen (9) oder Sammelbehältern (24).

13. Richtgerät (1) nach Anspruch 11 oder 12, **gekennzeichnet durch** eine Zubringervorrichtung (11) zum Zuführen einer Bearbeitungsmenge (21) von Holzschrauben (20) an eine Stelle (10) im Bereich im Wirkungsbereich der ausbildbaren Magnetfeldlinien (7) nahe der Ache (4) der Spule (2), wobei die Zubringervorrichtung (11) vorzugsweise einen Rütteltisch (40), einen mechanischen Greifer (41) oder einen mit einem Magneten betreibbaren Heber (42) umfasst, zum Abtrennen einer Bearbeitungsmenge von Holzschrauben aus einer Grossmenge (31) davon.

14. Richtgerät (1) nach einem der Ansprüche 11 bis 13, **gekennzeichnet durch** mindestens eine Trennwand (43) im Hohlraum (5) zur Teilung des Hohlraums (5) in mindestens zwei getrennte Teilräume (44).

15. Richtgerät (1) nach einem der Ansprüche 11 bis 14, **gekennzeichnet durch** eine oder mehrere verschiebbare Begrenzungswände (45) im Hohlraum (5), die mindestens im Bereich der Konturwand (6) quer zur Achse (2) verlaufen.

## Claims

1. A method for the parallel alignment of easily entangling screws of ferromagnetic material, which are suitable for wood, particle boards or screw anchors and referred to as wood screws (20) below, for the subsequent or simultaneous aligned packaging into packaging containers (33) by using an aligning apparatus (1) that is provided in the desired manner and comprises a coil (2), which can be operated with an electric alternating or direct current and has an axis (4) and a coil center, wherein the axis (4) extends through a cavity (5) of the coil (2), which is delimited toward the coil (2) with a contour wall (6), and wherein closed magnetic field lines (7), which traverse the cavity (5) parallel to the axis (5), are produced when the coil (2) is acted upon with a current, with said method comprising the following steps:
a) positioning a batch (21) of wood screws (20) to be processed at a location (10) in the effective range of the producible magnetic field lines (7) near the axis (4) of the coil (2), wherein the location (10) preferably is positioned higher than the coil center;
b) applying a predefined current profile to the coil (2) in order to produce magnetic field lines (7) such that the wood screws (20) swirl into the cavity (5) due to the magnetic effect, in the process align parallel to one another lengthwise along the magnetic field lines (7) and ultimately adhere on the contour wall (8) in parallel alignment to one another;
c) continuously lowering the current profile on the coil (2), wherein the wood screws (20) move downward along the contour wall (6) due to their own weight and preferably accumulate in this lowered position while their alignment is preserved;
d) transporting away the aligned wood screws (20), preferably to a packaging station (32);
wherein steps a) to d) are repeated until the method is interrupted and the next step a) can be carried out simultaneously with the last step d).

2. The method according to claim 1, **characterized in that** the current profile either consists of alternating current pulses with decaying amplitude in step c), preferably also in step b), or of a direct current profile, which slowly decays in step c), in step b), and **in that** the wood screws are then preferably subjected to an alternating magnetic field with decaying amplitude for demagnetization (20).

3. The method according to claim 1 or 2, **characterized in that** the contour wall (6) has different distances from the coil (2) in order to purposefully accumulate the wood screws (20) at preferred adhesion points (8), which lie closer to the coil (2) than adjacent locations, in step b).

4. The method according to one of the preceding claims, **characterized in that** one or more collecting devices (22), in which the wood screws (20) accumulate after step c) and before being transported away, are arranged underneath the preferred adhesion points (8) referred to the sliding or falling direction.

5. The method according to one of the preceding claims, **characterized in that** at least one partition wall (43) is arranged in the cavity (5) in order to divide the cavity (5) into at least two separate partial cavities (44), wherein at least two batches (21) of identical or different wood screws (20) to be processed are positioned in at least two locations (10) in step a), and wherein each partial cavity (44) is clearly assigned a different location (10) that lies closest to the respective partial cavity (44).

6. The method according to one of the preceding claims, **characterized in that** one or more boundary walls (45), which preferably can be displaced and extend transverse to the axis (4) at least in the region of the contour wall (6), are arranged in the cavity (5), **characterized in that** the positions of these boundary walls (45) are arranged in accordance with the length of the wood screws (20) at the beginning of the method.

7. The method according to one of the preceding claims, **characterized in that** the wood screws (20) are transported away with a conveyor system (23) and/or in collecting containers (24) in step d).

8. The method according to one of the preceding claims, **characterized in that** the axis (4) is aligned horizontally and the batch (21) to be processed preferably is moved to a location (10) outside the cavity (5) in step a).

9. The method according to claim 8, **characterized in that**, for axially transporting away the wood screws in step d), the bottom of the contour wall (6) has one or more collecting channels (9) for collecting the aligned wood screws (20) lowered in step c).

10. The method according to one of claims 1 to 7, **characterized in that** the axis (4) is aligned vertically and the batch to be processed is either moved to a location (10) underneath or above the coil (2) in step a), wherein the batch (21) to be processed can drop into the cavity (5) in the second case and step b) is carried out immediately thereafter, wherein the contour wall (5) preferably has multiple collecting troughs (8), which serve as preferred adhesion points (8) in step b) and are arranged closer to the coil (2) than adjacent locations, and wherein a collecting container (24), in which the wood screws (20) are collected in an upright manner in step c), preferably is located underneath each collecting trough (8).

11. An aligning apparatus (1) for the parallel alignment of easily entangling screws (20) of metal, which are suitable for wood, particle boards or screw anchors and referred to as wood screws (20) below, for the subsequent or simultaneous aligned packaging into packaging containers (33), comprising a coil (2) with an axis (2) extending through a cavity (5) of the coil (2), which is delimited toward the coil (2) with a contour wall (6) and has a smallest diameter D, and a feed and control unit (3) that is electrically connected to the coil (2) in order to act upon the coil (2) with an alternating current and/or direct current such that closed magnetic field lines (7) traversing the interior (5) can be produced during the operation of the apparatus, wherein the contour wall (6) has one or more preferred adhesion points (8) that are located closer to the coil (2) than adjacent regions in the contour wall (6), **characterized in that** one or more collecting channels (9) and/or collecting containers (24), which are narrower than one-third, preferably narrower than one-fourth, of the diameter D in any horizontal extent transverse to the axis, are arranged underneath these preferred adhesion points (8).

12. The aligning apparatus (1) according to claim 11, **characterized by** a conveyor system (23) for transporting away the wood screws (20) aligned in parallel in the collecting channels (9) or collecting containers (24).

13. The aligning apparatus (1) according to claim 11 or 12, **characterized by** a feeder device (11) for feeding a batch (21) of wood screws (20) to be processed to a location (10) in the effective range of the producible magnetic field lines (7) near the axis (4) of the coil (2), wherein the feeder device (11) preferably comprises a vibrating table (40), a mechanical gripper (41) or magnetically operable lifting equipment (42) for separating a batch of wood screws to be processed from a large batch (31).

14. The aligning apparatus (1) according to one of claims 11 to 13, **characterized by** at least one partition wall (43) in the cavity (5) in order to separate the cavity (5) into at least two separate partial cavities (44).

15. The aligning apparatus (1) according to one of claims 11 to 14, **characterized by** one or more displaceable boundary walls (45) in the cavity (5), wherein said boundary walls extend transverse to the axis (2) at least in the region of the contour wall (6).

## Revendications

1. Procédé, destiné à l'alignement parallèle de vis à fort ancrage en un métal ferromagnétique, adaptées au bois, aux panneaux de particule ou aux chevilles, appelées en conséquence vis à bois (20) pour l'emballage aligné ultérieur ou simultané dans des conteneurs d'emballage (33) prévus, en utilisant un dispositif d'alignement (1), qui est mis à disposition de manière souhaitée, comprenant une bobine (2) actionnable à l'aide de courant alternatif ou continu, pourvue d'un axe (4) et d'un point médian de bobine, l'axe (4) conduisant à travers une cavité (5) de la bobine (2) qui est délimitée par une paroi de contour (6) vers la bobine (2), lorsque la bobine (2) est sollicitée par du courant, des lignes de champ magnétique (7) fermées se constituant, qui traversent la cavité (5) à la parallèle de l'axe (5), comprenant les étapes suivantes, consistant à :
a) positionner une quantité à traiter (21) de vis à bois (20) en un endroit (10) dans la zone d'action des lignes de champ magnétique (7) constituables, à proximité de l'axe (4) de la bobine (2), l'endroit (10) étant de préférence placé plus haut que le point médian de bobine ;
b) appliquer un profil de courant prédéfini sur la bobine (2) pour créer des lignes de champ magnétique (7), de telle sorte que sous l'effet magnétique, les vis à bois (20) tourbillonnent dans la cavité (5), s'alignent à cet effet le long des lignes de champ magnétique (7), à la parallèle les unes des autres par leur longueur et adhèrent finalement sur la paroi de contour (8), à la parallèle les unes des autres ;
c) abaisser en continu le profil de courant sur la bobine (2), en maintenant leur alignement, du fait de leur propre poids, les vis à bois (20) s'abaissant vers le bas le long de la paroi de contour (6) et s'y accumulant de préférence ;
d) expulser les vis à bois (20) alignées, de préférence vers un poste d'emballage (32) ;
les étapes a) à d) étant réitérées jusqu'à une interruption du procédé et l'étape a) suivante pouvant être réalisée simultanément avec la dernière étape d).

2. Procédé selon la revendication 1, **caractérisé en ce que** soit dans l'étape c), de préférence également dans l'étape b), le profil de courant est constitué d'impulsions de courant alternatif à amplitude décroissante ou à l'étape b) est constitué d'un profil de courant continu, lequel décroît lentement dans l'étape c) et **en ce que** pour leur démagnétisation (20), les vis à bois sont ensuite exposées de préférence à un champ magnétique alternatif à amplitude décroissante.

3. Procédé selon la revendication 1 ou 2, **caractérisé en ce que** la paroi de contour (6) présente différents écarts par rapport à la bobine (2), pour collecter de manière ciblée les vis à bois (20) à l'étape b) sur des endroits d'adhérence (8) préférentiels, qui sont plus proches de la bobine (2) que des endroits voisins.

4. Procédé selon l'une quelconque des revendications précédentes, **caractérisé en ce que** dans la direction de glissement ou de chute, en dessous des endroits d'adhérence (8) préférentiels sont placés un ou plusieurs dispositifs de réception (22), dans lesquels les vis à bois (20) s'accumulent après l'étape c), avant qu'elles ne soient évacuées.

5. Procédé selon l'une quelconque des revendications précédentes, **caractérisé en ce que** dans la cavité (5) est placée au moins une paroi de séparation (43), destinée à diviser la cavité (5) en au moins deux espaces partiels (44) séparés, dans l'étape a), au moins deux quantités à traiter (21) de vis à bois (20) identiques ou différentes étant positionnées en au moins deux endroits (10) et à chaque espace partiel (44) étant indubitablement affecté un endroit (10) différent, qui est le plus proche de l'espace partiel (44) concerné.

6. Procédé selon l'une quelconque des revendications précédentes, **caractérisé en ce que** dans la cavité (5) sont placées de préférence une ou plusieurs parois de délimitation (45) de préférence déplaçables, qui au moins dans la zone de la paroi de contour (6) s'écoulent à la transversale de l'axe (4), **caractérisé en ce qu'**au début du procédé, les positions desdites parois de délimitation (45) sont positionnées en conséquence de la longueur des vis à bois (20).

7. Procédé selon l'une quelconque des revendications précédentes, **caractérisé en ce que** dans l'étape d), les vis à bois (20) sont évacuées à l'aide d'une installation de convoyage (23) et / ou dans des conteneurs de collecte (24).

8. Procédé selon l'une quelconque des revendications précédentes, **caractérisé en ce que** l'axe (4) est aligné à l'horizontale et dans l'étape a), la quantité à traiter (21) est amenée de préférence en un endroit (10) extérieur à la cavité (5).

9. Procédé selon la revendication 8, **caractérisé en ce que** pour l'évacuation axiale dans l'étape d), la paroi de contour (6) comporte en bas un ou plusieurs canaux collecteurs (9), destinés à réceptionner les vis à bois (20) alignées, abaissées à l'étape c).

10. Procédé selon l'une quelconque des revendications 1 à 7, **caractérisé en ce que** l'axe (4) est aligné à la verticale et dans l'étape a), la quantité à traiter est soit amenée en un endroit (10) en-dessous ou au-dessus de la bobine (2), dans le deuxième cas cité, la quantité à traiter (21) pouvant chuter dans la cavité (5) et l'étape b) faisant immédiatement suite, dans l'étape b), la paroi de contour (5) comportant en tant qu'endroits d'adhérence (8) préférentiels de préférence plusieurs cuvettes collectrices (8), lesquelles sont placées plus près de la bobine (2) que des endroits voisins et de préférence sous chaque cuvette collectrice (8) se trouvant un conteneur collecteur (24), dans lequel dans l'étape c), les vis à bois (20) sont réceptionnées debout.

11. Dispositif d'alignement (1), destiné à l'alignement parallèle de vis (20) à fort ancrage en un métal, adaptées au bois, aux panneaux de particule ou aux chevilles, appelées en conséquence vis à bois (20), pour l'emballage aligné ultérieur ou simultané dans des conteneurs d'emballage (33) prévus, comprenant une bobine (2) pourvue d'un axe (2), qui conduit à travers une cavité (5) de la bobine (2), qui est délimitée par une paroi de contour (6) vers la bobine (2) et qui présente un diamètre D le plus petit, une alimentation électriquement connectée avec la bobine (2) et un système de commande (3), destiné à solliciter la bobine (2) avec un courant alternatif et / ou un courant continu, de telle sorte qu'en fonctionnement, des lignes de champ magnétique (7) fermées puissent se constituer, qui traversent l'espace intérieur (5), la paroi de contour (6) comportant un ou plusieurs endroits d'adhérence (8) préférentiels, lesquels sont plus proches de la bobine (2) que des régions voisines dans la paroi de contour (6), **caractérisé en ce qu'**en-dessous desdits endroits d'adhérence (8) préférentiels sont placés un ou plusieurs canaux collecteurs (9) et / ou conteneurs collecteurs (24), lesquels dans chaque extension horizontale sont plus étroits à la transversale de l'axe qu'un tiers, de préférence plus étroits qu'un quart du diamètre D.

12. Dispositif d'alignement (1) selon la revendication 11, **caractérisé par** une installation de convoyage (23) destinée à évacuer les vis à bois (20) alignées à la parallèle dans les canaux collecteurs (9) ou dans les conteneurs de collecte (24).

13. Dispositif d'alignement (1) selon la revendication 11 ou 12, **caractérisé par** un dispositif de navette (11), destiné à alimenter une quantité à traiter (21) de vis à bois (20) vers un endroit (10) dans la zone de la zone d'action des lignes de champ magnétique (7) constituables, à proximité de l'axe (4) de la bobine (2), le dispositif de navette (11) comprenant de préférence une table vibrante (40), un grappin (41) mécanique ou un releveur (42) actionnable par un aimant, pour séparer une quantité à traiter de vis à bois d'une grande quantité (31) de ces dernières.

14. Dispositif d'alignement (1) selon l'une quelconque des revendications 11 à 13, **caractérisé par** au moins une paroi de séparation (43) dans la cavité (5), destinée à diviser la cavité (5) en au moins deux espaces partiels (44).

15. Dispositif d'alignement (1) selon l'une quelconque des revendications 11 à 14, **caractérisé par** une ou plusieurs parois de délimitation (45) déplaçables dans la cavité (5), qui au moins dans la zone de la paroi de contour (6) s'écoulent à la transversale de l'axe (2).
